# EUROPEAN PATENT SPECIFICATION

(11) **EP 3 246 561 B1**
(45) Date of publication and mention of the grant of the patent: **14.08.2019**
(21) Application number: 17158135.8
(22) Date of filing: 27.02.2017
(51) Int. Cl.: F03D 80/00, F03D 80/80

(54) **WIND TURBINE NACELLE, WIND TURBINE GENERATOR, AND METHOD FOR LIFTING AND LOWERING COMPONENT OF WIND TURBINE GENERATOR**
MASCHINENGEHÄUSE EINER WINDKRAFTANLAGE, WINDKRAFTANLAGE UND VERFAHREN ZUM HEBEN UND SENKEN EINES BESTANDTEILS EINER WINDKRAFTANLAGE
NACELLE D'ÉOLIENNE, GÉNÉRATEUR D'ÉOLIENNE ET MÉTHODE POUR SOULEVER ET ABAISSER UN ÉLÉMENT D'UN GÉNÉRATEUR D'ÉOLIENNE

(30) Priority: 20.05.2016 JP 2016101031
(43) Date of publication of application: 22.11.2017
(73) Proprietor: Mitsubishi Heavy Industries, Ltd., Tokyo 108-8215 (JP)
(72) Inventor: Tezuka, Norikazu, Tokyo, 108-8215 (JP); Takayanagi, Kazufumi, Tokyo, 108-8215 (JP); Sakaue, Tatsuya, Tokyo, 108-8215 (JP); Fujino, Yasuto, Tokyo, 108-8215 (JP)
(74) Representative: Henkel, Breuer & Partner

(56) References cited:
- EP-A2- 1 101 934
- EP-A2- 2 617 988
- WO-A1-2013/042621
- JP-A- 2007 120 286
- KR-A- 20150 049 048
- US-A1- 2013 309 090
- US-A1- 2015 132 119

## Description

### TECHNICAL FIELD

The present disclosure relates to a wind turbine nacelle, a wind turbine generator, and a method for lifting and lowering a component of a wind turbine generator.

### BACKGROUND ART

During maintenance on a wind turbine generator, a part of a nacelle cover may be removed or moved to a predetermined position for performing, for example, maintenance for devices disposed in a nacelle.

For example, in JP 5518207 B (Specification), an upper panel of a nacelle cover formed of an upper panel and a lower panel bolted to each other is removed for performing a maintenance for devices in a nacelle.

In EP 1677000 A (Specification), an upper cover (ceiling portion) of a nacelle is slid in a horizontal direction with respect to a lower cover of the nacelle, to be removed from the lower cover.

EP 1101934 A2 discloses a wind turbine nacelle comprising a nacelle cover forming a nacelle inner space, wherein the nacelle cover is divided in a fixed cover and a movable cover. Further, the turbine nacelle includes an opening at a bottom thereof configured such that a generator can pass through the opening. A lifting and lowering device is disposed inside of the turbine nacelle when the lifting and lowering device is in a stand-by position. The movable cover is divided into two separate covers that are hinged to the turbine nacelle. When the lifting lowering device is to be used, each part of the movable cover is folded aside, respectively in order to open the turbine nacelle on a top side thereof to provide an expanded space for operating the lifting and lowering device.

US2015/132119 A1 discloses a wind turbine nacelle in which a guide transfer mechanism is mountable. A movable cover of the nacelle can be transferred to a front side or a rear side of the nacelle by operating the transfer mechanism in order to allow an access to the inside of the nacelle from above. In order to move the movable cover aside, the movable cover has to be lifted a little bit in an upward direction to be disengaged from a nacelle edge.

KR 20150049048 A discloses a configuration of a wind turbine nacelle that allows a ventilation of the inside thereof. A movable cover is liftable in a vertical direction with respect to a fixed cover in order to form a ventilation path between the movable cover and the fixed cover.

EP2617988 A2 discloses an apparatus for performing an opening operation of a movable cover of a nacelle in order to open the nacelle on a top side thereof such that a device can be removed from the nacelle.

US 2013/042621 A1 discloses a wind turbine nacelle, wherein the nacelle includes a movable cover that can be swing opened in order to provide an opening such that components can be moved by a crane through the opening to an inside of the nacelle.

### SUMMARY

When an inner space of the nacelle is opened by partially removing the nacelle cover, the maintainability might be degraded depending on weather conditions such as rain and wind.

JP 5518207 B (Specification) and EP 1677000 A (Specification) describe no specific countermeasure for such a degradation of the maintainability.

In view of the above, an object of at least one embodiment of the present invention is to provide a wind turbine nacelle, a wind turbine generator, and a method for lifting and lowering a component of a wind turbine generator in which a work space for maintenance can be formed without compromising the maintainability.
(1) According to the present invention, there is provided a wind turbine nacelle including the features of claim 1. Preferable embodiments are described in the dependent claims.
   In this specification, the upper and lower direction is a direction along the vertical direction.
   In the configuration (1), the movable cover including at least a part of the ceiling portion of the nacelle cover can be moved in the upper and lower direction with respect to the fixed cover including the side wall portion of the nacelle cover. Thus, by moving the movable cover in the upper and lower direction with respect to the fixed cover, a work space for maintenance can be formed between the movable cover and the fixed cover in the upper and lower direction. In the configuration (1), the work space formed by moving the movable cover is covered by the movable cover disposed above, whereby an influence of weather such as rain and wind during the maintenance work in the work space can be reduced. All things considered, the maintainability can be guaranteed with the configuration (1).
(2) In some embodiment, the configuration (1) further includes at least one actuator for lifting and lowering the movable cover with respect to the fixed cover.
   In the configuration (2), the movable cover can be lifted and lowered with respect to the fixed cover, with a simple configuration using the actuator.
(3) In some embodiment, in the configuration (2), the at least one actuator includes:
   a cylinder which is fixed to one of the fixed cover or the movable cover; and
   a piston which is fixed to the other one of the fixed cover or the movable cover, and is configured to reciprocate while being guided by the cylinder.

   In the configuration (3), by moving the other one of the fixed cover and the movable cover in accordance with the reciprocation of the piston guided by the cylinder fixed to the one of the fixed cover and the movable cover, the movable cover can be moved in the upper and lower direction with respect to the fixed cover. Thus, a maintenance work space can be formed between the movable cover and the fixed cover.
(4) In some embodiments, in the configuration (2) or (3), the at least one actuator includes a plurality of actuators arranged so as to support a load of the movable cover, the load being distributed evenly among the actuators.
   In the configuration (4), the movable cover is supported with its load evenly distributed among the plurality of actuators. Thus, the movable cover can be stably moved, and can be stably held at the position separated from the fixed cover.
(5) In some embodiment, in any one of the configurations (2) to (4), each of the at least one actuator is attached to the movable cover while having a movable space in relation to the movable cover.
   In the configuration (5), the actuator is attached to the movable cover while having the movable space in relation to the movable cover. Thus, the actuator can be prevented from malfunctioning even when the positions of the fixed cover and the movable cover are shifted with each other.
(6) In some embodiment, any one of the configurations (1) to (5) further includes a linear guide for guiding the movable cover to move in the upper and lower direction with respect to the fixed cover.
   In the configuration (6), with the movable cover moving in the upper and lower direction with respect to the fixed cover while being guided by the linear guide, the actuator can smoothly move the movable cover upward and downward.
(7) In some embodiments, any one of the configurations (1) to (6), further includes a wall member for closing a gap between the movable cover and the fixed cover when the movable cover is lifted.
   In the configuration (7), with the gap between the movable cover at a lifted position and the fixed cover closed by the wall member as described above, rain, wind, or the like can be prevented from entering the maintenance work space through the gap. Thus, the maintenance work in the work space can be performed while being less affected by the weather such as rain and wind.
(8) In some embodiments, in the configuration (7), the wall member includes a bellows member extendable and retractable in the upper and lower direction.
   In the configuration (8), the wall member includes the bellows member described above, the bellows member can be extended and contacted in accordance with the amount of movement of the movable cover in the upper and lower direction. Thus, the gap between the movable cover and the fixed cover can be closed regardless of the position of the movable cover with respect to the fixed cover, whereby the influence of rain and wind on the maintenance work in the work space can be more effectively reduced.
(9) In some embodiments, in any one of the configurations (1) to (8), the wind turbine nacelle further includes a supporting member configured to support the load of the movable cover when the movable cover is lifted, the supporting member including an upper end portion fixed to the movable cover and a lower end portion fixed to the fixed cover.
   In the configuration (9), when the movable cover is lifted, the load of the movable cover is supported by the supporting member. Thus, the movable cover can be stably held at a position lifted with respect to the fixed cover.
(10) In some embodiments, in any one of the configurations (1) to (9).
   the nacelle cover includes a plurality of cover sections which are arranged along a front and rear direction of the wind turbine nacelle and coupled to each other,
   at least one cover section of the plurality of cover sections includes:
   a fixed member which forms at least a part of the fixed cover; and
   a movable member which forms at least a part of the movable cover, is disposed above the fixed member, and is configured to be movable in the upper and lower direction with respect to the fixed member.

   In the configuration (10), in any appropriate one of the plurality of cover sections forming the nacelle cover, the movable member forming the movable cover can be moved with respect to the fixed member forming the fixed cover. Thus, for example, the movable member can be moved in the upper and lower direction with respect to the fixed member only in one of the cover sections at a positioned where the space for the maintenance work is desired to be formed. All things considered, the maintenance work space can be efficiently formed.
(11) In some embodiments, in any one of the configurations (1) to (10), the movable cover at least includes an area, in the ceiling portion of the nacelle cover, in which a temporary lifting and lowering device is installed.
   In the configuration (11), the temporary lifting and lowering device can be disposed in the expanded space formed by moving the movable cover in the upper and lower direction with respect to the fixed cover. Thus, when the temporary lifting and lowering device is not required, the space for the temporary lifting and lowering device is not required in the nacelle. Thus, the nacelle cover can have a relatively small size in the upper and lower direction when the temporary lifting and lowering device is not required (that is, when the movable cover is not lifted). Thus, the nacelle and the wind turbine generator 1 can have a smaller size and a lighter weight.
(12) A wind turbine generator according to at least one embodiment of the present invention includes:
   the nacelle according to any one of configurations (1) to (11);
   a wind turbine rotor rotatably supported by the nacelle; and
   a generator configured to be driven by rotational energy from the wind turbine rotor.

   In the configuration (12), the movable cover including at least a part of the ceiling portion of the nacelle cover can be moved in the upper and lower direction with respect to the fixed cover including the side wall portion of the nacelle cover. Thus, by moving the movable cover in the upper and lower direction with respect to the fixed cover, a work space for maintenance can be formed between the movable cover and the fixed cover in the upper and lower direction. In the configuration (12), the work space formed by moving the movable cover is covered by the movable cover disposed above, whereby an influence of weather such as rain and wind during the maintenance work in the work space can be reduced. All things considered, the maintainability can be guaranteed with the configuration (12).
(13) In some embodiments, in the configuration (12), the nacelle further includes at least one actuator for lifting and lowering the movable cover with respect to the fixed cover, and
   the actuator is configured to move the movable cover with hydraulic pressure or pneumatic pressure used by a drive train or an auxiliary machine of the wind turbine generator.
   In the configuration (13), the movable cover can be efficiently lifted and lowered with respect to the fixed cover with the hydraulic pressure or the pneumatic pressure used in the drive train or an auxiliary machine of the wind turbine generator.
(14) According to the present invention, there is also provided a method for lifting and lowering a component of a wind turbine generator including the features of claim 14. A preferable embodiment is described in the dependent claim 15.
   In the method (14), the temporary lifting and lowering device can be installed in the expanded space formed by moving the movable cover in the upper and lower direction with respect to the fixed cover. Thus, when the temporary lifting and lowering device is not required, the space for the temporary lifting and lowering device is not required in the nacelle. Thus, the nacelle cover can have a relatively small size in the upper and lower direction when the temporary lifting and lowering device is not required (that is, when the movable cover is not lifted). Thus, the nacelle and the wind turbine generator can have a smaller size and a lighter weight.
(15) In some embodiments, in the method (14), the step of lifting the movable cover includes guiding the movable cover with a linear guide in such a manner that the movable cover moves in the upper and lower direction with respect to the fixed cover.
   In the method (15), with the movable cover moving in the upper and lower direction with respect to the fixed cover while being guided by the linear guide, the actuator can smoothly move the movable cover upward and downward.

At least one embodiment of the present invention can provide a wind turbine nacelle, a wind turbine generator, and a method for lifting and lowering a component of a wind turbine generator in which a work space for maintenance can be formed without compromising the maintainability.

### BRIEF DESCRIPTION OF DRAWINGS

FIG. 1 is a schematic view illustrating an overall configuration of a wind turbine according to one embodiment;
FIG. 2 is a schematic plan view illustrating the inside of the nacelle according to one embodiment;
FIG. 3 is a perspective view illustrating the nacelle according to one embodiment;
FIG. 4A is a cross-sectional view of the nacelle illustrated in FIG. 3 taken along a front and rear direction;
FIG. 4B is a partial cross-sectional view of the nacelle illustrated in FIG. 3 taken along a direction orthogonal to the front and rear direction;
FIG. 5 is a partially enlarged view of the nacelle illustrated in FIG. 4A;
FIG. 6 is a cross-sectional view of the nacelle and is a plan view of an attachment portion of an actuator illustrated in FIG. 5;
FIG. 7 is a perspective view of a wind turbine generator including a nacelle according to one embodiment; and
FIG. 8 is a diagram illustrating an example of a method of installing a temporary lifting and lowering device.

### DETAILED DESCRIPTION

Embodiments of the present invention will now be described in detail with reference to the accompanying drawings. It is intended, however, that unless particularly specified, dimensions, materials, shapes, relative positions, and the like of components described in the embodiments or illustrated in the accompanying drawings shall be interpreted as illustrative only and not limitative of the scope of the present invention.

In the description below, a wind turbine nacelle and a wind turbine generator according to some embodiments are described, and then a method for lifting and lowering a component of a wind turbine generator is described.

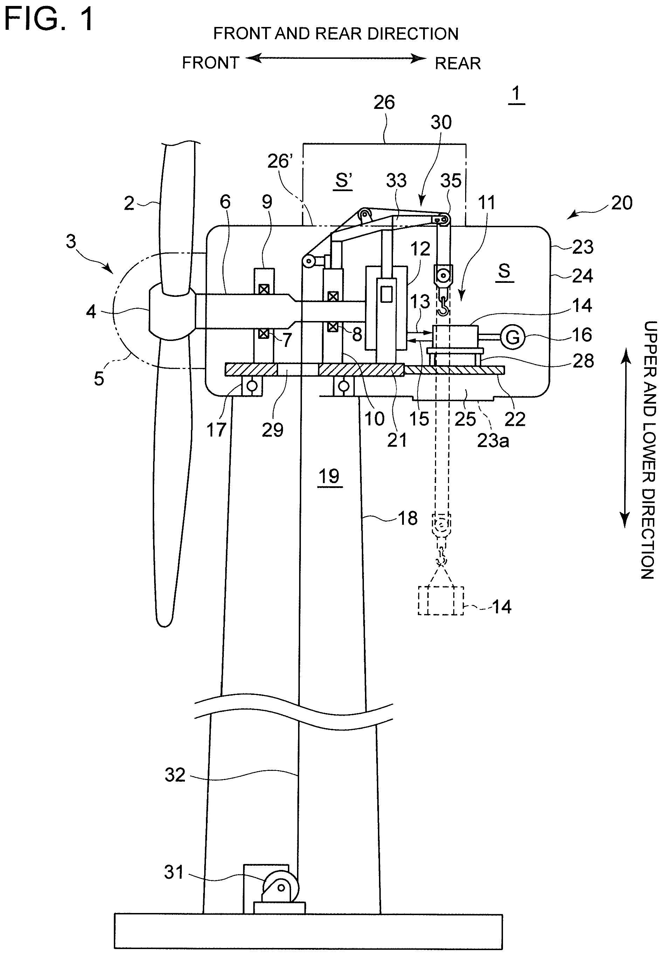

FIG. 1 is a schematic view illustrating an overall configuration of a wind turbine generator according to one embodiment. As illustrated in the figure, the wind turbine generator 1 includes: a rotor (wind turbine rotor) 3 including at least one blade 2 and a hub 4; a main shaft 6 coupled to the hub 4; a generator 16 that generates power; a drive train 11 through which rotational energy from the main shaft 6 is transmitted to the generator 16; and a nacelle (wind turbine nacelle) 20 containing various devices including the main shaft 6. The hub 4 may be covered by a hub cover (spinner) 5.

The rotor 3 is rotatably supported by the nacelle 20. Rotational energy from the rotor 3 is transmitted to the generator 16, via the main shaft 6 rotating together with the rotor 3 and the drive train 11, and drives the generator 16. Thus, the generator 16 is driven by the rotational energy from the rotor 3.

The nacelle 20 includes a nacelle base plate 21, a nacelle frame 22 attached to the nacelle base plate 21, and a nacelle cover 23.

The devices accommodated in the nacelle 20 are connected to the nacelle base plate 21 or a rear end portion of the nacelle base plate 21, and are supported by the nacelle frame 22 extending along an axial direction of the main shaft 6, and the like. In FIG. 1, only a part of the nacelle frame 22 is illustrated as an example.

The nacelle cover 23 is disposed to cover the nacelle base plate 21, the nacelle frame 22, and the devices accommodated in the nacelle 20. A nacelle inner space S isolated from an outer space is formed on the inner side of the nacelle cover 23.

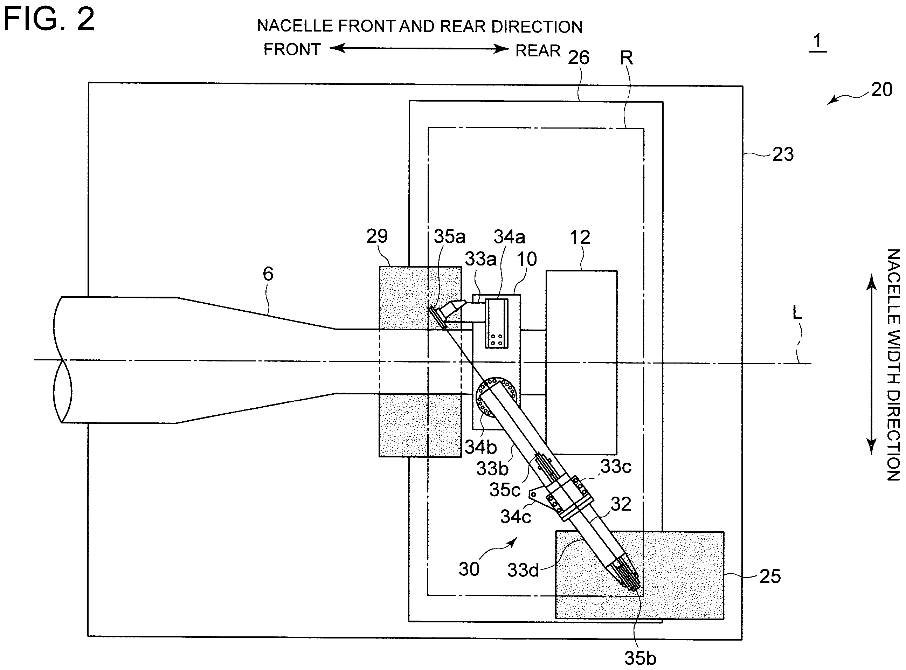

In this specification, a front and rear direction of the nacelle 20 is a direction along the axial direction of the main shaft 6. In the nacelle inner space S, a side closer to and a side far from the hub 4 in the axial direction of the main shaft 6 are respectively referred to as a front side and a rear side. A width direction of the nacelle 20 is a direction orthogonal to the front and rear direction of the nacelle 20 in plan view (see FIG. 2).

The nacelle 20 is supported by a tower 18 standing on the ground or water. The nacelle base plate 21 may be attached to an upper end of the tower via a yaw bearing 17. The main shaft 6 may be attached to the nacelle 20 via a pair of main bearings. The main bearings include a front bearing 7 and a rear bearing 8 positioned more on the rear side than the front bearing 7. A housing 9 of the front bearing 7 and a housing 10 of the rear bearing 8 may each be supported by the nacelle base plate 21.

In an exemplary embodiment illustrated in FIG. 1, the drive train 11 includes: a hydraulic pressure pump 12 attached to the main shaft 6; and a hydraulic pressure motor 14 connected to the hydraulic pressure pump 12 via a high-pressure oil line 13 and a low-pressure oil line 15. The hydraulic pressure pump 12 has an outlet connected to an inlet of the hydraulic pressure motor 14 through the high-pressure oil line 13. The hydraulic pressure motor 14 has an outlet connected to the hydraulic pressure pump 12 through the low-pressure oil line 15.

The hydraulic pressure pump 12 is supported by the nacelle base plate 21 of the nacelle 20 via an unillustrated torque arm. The torque arm is configured to absorb vibrations and torque of the hydraulic pressure pump 12. The hydraulic pressure motor 14 is supported by the nacelle frame 22 via a support 28.

In the drive train 11 described above, the hydraulic pressure pump 12 is driven by the main shaft 6 to increase the pressure of the hydraulic oil to generate high pressure hydraulic oil (pressure oil). The pressure oil generated by the hydraulic pressure pump 12 is supplied to the hydraulic pressure motor 14 through the high-pressure oil line 13, to drive the hydraulic pressure motor 14. The hydraulic oil, having a low pressure after working in the hydraulic pressure motor 14, returns to the hydraulic pressure pump 12 through the low-pressure oil line 15 provided between the outlet of the hydraulic pressure motor 14 and the inlet of the hydraulic pressure pump 12. The hydraulic pressure motor 14 has an output shaft connected to an input shaft of the generator 16. Thus, the rotation of the hydraulic pressure motor 14 is input to the generator 16. The number of each of the hydraulic pressure pump 12, the hydraulic pressure motor 14, and the generator 16 is not limited, and may be any number not smaller than one.

FIG. 1 illustrates an example where a hydraulic transmission is used. However, this should not be construed in a limiting sense. A drive train with a configuration in which torque of the main shaft 6 is transmitted to the generator 16 via a speed increasing gear may be employed. Alternatively, a configuration in which the main shaft 6 and generator 16 are directly coupled to each other with no drive train 11 provide may be employed.

In the embodiment illustrated in FIG. 1, the nacelle cover 23 includes: a fixed cover 24 including a side wall portion of the nacelle cover 23; and a movable cover 26 including at least a part of a ceiling portion of the nacelle cover. The movable cover 26 is attached to the fixed cover 24 in such a manner as to be movable in an upper and lower direction with respect to the fixed cover 24.

In FIG. 1, the movable cover 26 in a state of being lifted with respect to the fixed cover 24 is illustrated with a solid line. The movable cover 26 at a position (26') is illustrated with a two-dot chain line. The movable cover 26 at this position is not lifted with respect to the fixed cover 24. In this state, the movable cover 26 and the fixed cover 24 continue to each other and integrally form the nacelle cover 23. In the state where the movable cover 26 has been lifted with respect to the fixed cover 24, an expanded space S' as the nacelle inner space that has been expanded is formed below the lifted movable cover 26.

In this manner, when the movable cover 26 is moved in the upper and lower direction with respect to the fixed cover 24 (for example, by moving the movable cover 26' at the position not lifted with respect to the fixed cover 24 in FIG. 1 to the movable cover 26 at the position above the fixed cover 24), the expanded space S' serving as a work space for maintenance can be formed between the movable cover 26 and the fixed cover 24 in the upper and lower direction.

The work space (expanded space S') thus formed is covered with the movable cover 26 on the upper side, and thus the maintenance in the work space is less likely to be affected by weather such as rain and wind. Thus, the nacelle 20 in which the work space can be formed can guarantee workability for the maintenance.

FIG. 2 is a schematic plan view illustrating an inside of the nacelle 20 of the wind turbine generator 1 according to one embodiment.

As illustrated in FIGS. 1 and 2, a temporary lifting and lowering device 30 may be installed in the nacelle inner space S. For example, the temporary lifting and lowering device 30 is a lifting and lowering device that lifts and lowers a device disposed in the nacelle inner space S between the nacelle inner space S and a nacelle outer space through a first opening 25 formed in the nacelle 20. The temporary lifting and lowering device 30 is temporarily installed in the nacelle inner space S only when the temporary lifting and lowering device 30 is used (that is, when maintenance is performed for the wind turbine generator 1). A lid 23a may be provided so that the first opening 25 can be opened and closed for maintaining the nacelle inner space S in an approximately airtight state to be isolated from the nacelle outer space.

In an exemplary embodiment illustrated in FIGS. 1 and 2, the temporary lifting and lowering device 30 includes: a winder 31 disposed in a tower inner space 19; a wire 32 with which the device in the nacelle inner space S is suspended; an arm 33 (33a to 33d) disposed in the nacelle inner space S; brackets 34(34a to 34c); and pulleys 35 (35a to 35c).

The wire 32 extends between the arm 33 in the nacelle inner space S and the winder 31 in the tower inner space 19 through a second opening 29 formed in the nacelle base plate 21. The second opening 29 formed in the nacelle base plate 21 on the inner side of the yaw bearing 17 and communicates the nacelle inner space S with the tower inner space 19.

For example, the temporary lifting and lowering device 30 may be disposed in the nacelle inner space S via the brackets 34 (34a to 34c) attached to the housing 10 of the rear bearing 8, the nacelle base plate 21, or the like.

FIG. 2 illustrates the temporary lifting and lowering device 30 that is disposed on one side of the main shaft 6 in such a manner as to be capable of lifting and lowering the device. Alternatively, the temporary lifting and lowering device 30 may be disposed on the other side of the main shaft 6 in such a manner as to be capable of lifting and lowering the device. In this configuration, the temporary lifting and lowering device 30 may be positioned symmetrical to the illustrated position with respect to a straight line L representing an axial center of the main shaft 6.

In some embodiments, as illustrated in FIGS. 1 and 2, at least a part of the temporary lifting and lowering device 30 is disposed in the expanded space S' formed by moving the movable cover 26 in the upper and lower direction with respect to the fixed cover 24. Thus, the movable cover 26 at least includes a region R (see FIG. 2), in a ceiling portion of the nacelle cover 23, where the temporary lifting and lowering device 30 is disposed.

For example, when the temporary lifting and lowering device 30 is attached to the nacelle 20 via the housing 10 of the rear bearing 8, the movable cover 26 may be provided in the region R including a range, in the front and rear direction, in the ceiling portion at least including the housing 10.

As described above, in the nacelle 20, the temporary lifting and lowering device 30 can be disposed in the expanded space S' formed by moving the movable cover 26 in the upper and lower direction with respect to the fixed cover 24. Thus, when the temporary lifting and lowering device 30 is not required, the space for the temporary lifting and lowering device 30 is not required in the nacelle 20. Thus, the nacelle cover 23 can have a relatively small size in the upper and lower direction when the temporary lifting and lowering device 30 is not required (that is, when the movable cover 26 is not lifted). Thus, the nacelle 20 and the wind turbine generator 1 can have a smaller size and a lighter weight.

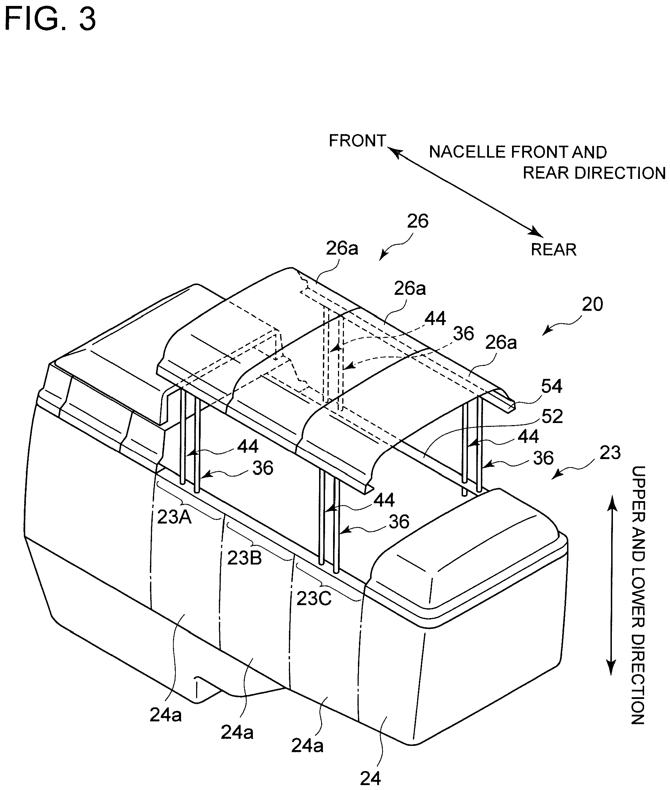

FIG. 3 is a perspective view of the nacelle (wind turbine nacelle) according to one embodiment. FIG. 3 illustrates the nacelle 20 in a state where the movable cover 26 of the nacelle cover 23 has been lifted upward with respect to the fixed cover 24.

In an exemplary embodiment illustrated in FIG. 3, the nacelle cover 23 includes a plurality of cover sections 23A to 23C that are arranged in the front and rear direction of the nacelle 20 and are coupled to each other. The cover sections 23A to 23C each include: a fixed member 24a forming a part of the fixed cover 24; and a movable member 26a forming a part of the movable cover 26. The movable member 26a of each of the cover sections 23A to 23C is positioned above the corresponding one of the fixed members 24a, and can be moved in the upper and lower direction with respect to the fixed member 24a.

Thus, in any appropriate one of the plurality of cover sections 23A to 23C forming the nacelle cover 23, the movable member 26a forming the movable cover 26 can be moved with respect to the fixed member 24a forming the fixed cover 24. Thus, for example, the movable member 26a can be moved in the upper and lower direction with respect to the fixed member 24a only in one of the cover sections 23A to 23C at a positioned where the space for the maintenance work is desired to be formed. All things considered, the maintenance work space (expanded space S') can be efficiently formed.

In the embodiment illustrated in FIG. 3, the nacelle 20 includes: a flange 52 provided in at least a part of an upper end portion of the fixed cover 24; and a flange 54 provided in at least a part of a lower end portion of the movable cover 26. The flange 52 protrudes toward the inner side of the nacelle 20 from a portion, in the upper end portion of the fixed cover 24, facing the movable cover 26. The flange 54 protrudes toward the inner side of the nacelle 20, in the lower end portion of the movable cover 26.

When the movable cover 26 is not lifted with respect to the fixed cover 24, such as a case where the wind turbine generator 1 is in a normal operation, the flange 52 of the fixed cover 24 and the flange 54 of the movable cover 26 may be fastened and thus connected to each other with bolts.

In some embodiments, as illustrated in FIG. 3, the nacelle 20 includes actuators 36 for lifting and lowering the movable cover 26 with respect to the fixed cover 24. The movable cover 26 can be lifted and lowered with respect to the fixed cover by operating the actuator 36.

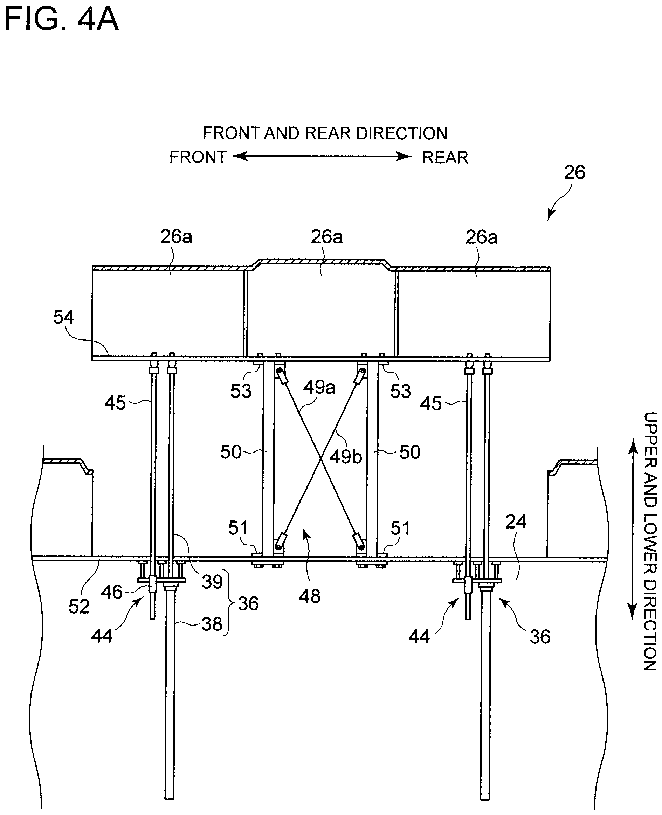

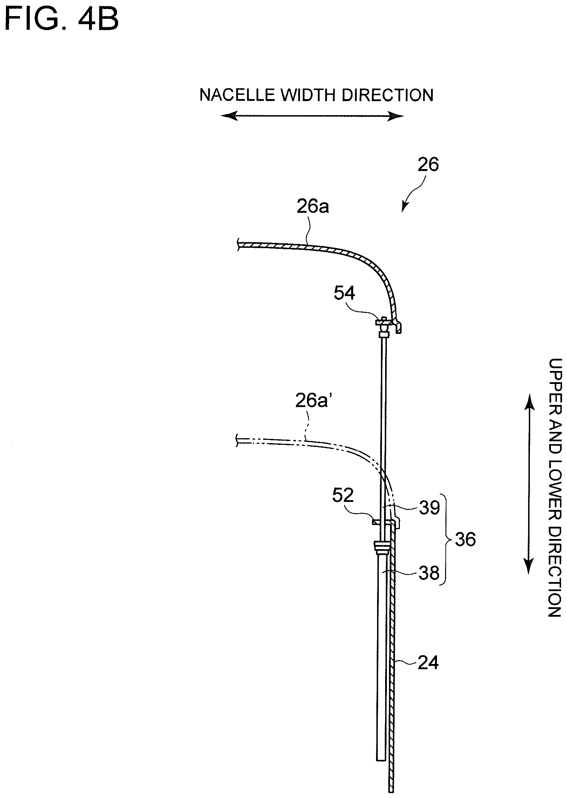

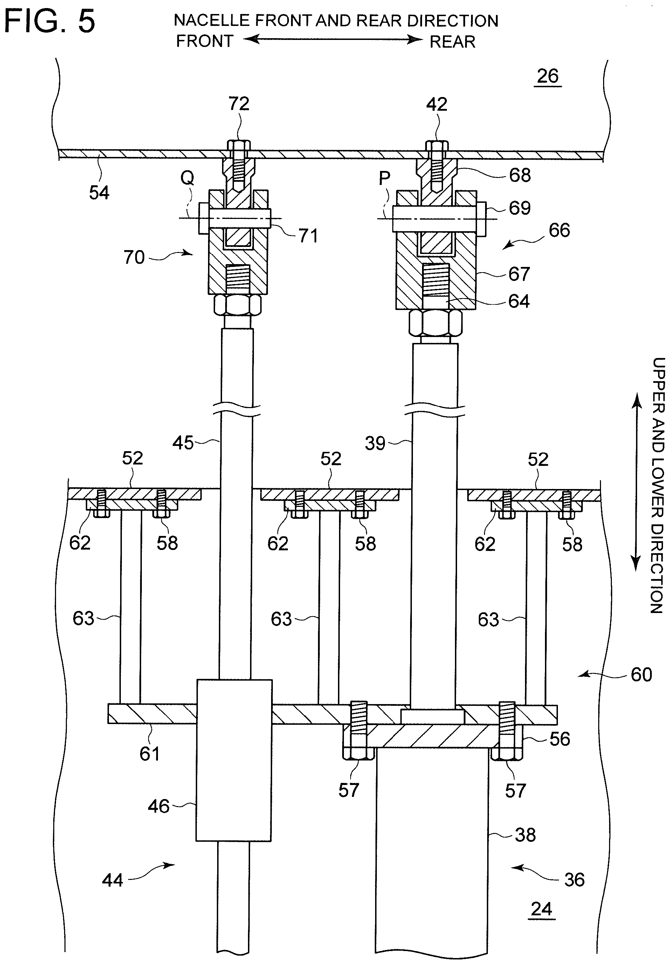

FIG. 4A is a cross-sectional view of the nacelle 20 illustrated in FIG .3, taken along the front and rear direction. FIG. 4B is a partial cross-sectional view of the nacelle 20 illustrated in FIG. 3, taken along a direction orthogonal to the front and rear direction. FIG. 5 is a partially enlarged view of the nacelle 20 illustrated in FIG. 4A.

In the exemplary embodiment illustrated in FIG. 3, the plurality of actuators 36 are arranged to support the movable cover 26 in such a manner that the load of the movable cover 26 is distributed evenly among the actuators 36. More specifically, in the exemplary embodiment illustrated in FIG. 3, the actuator 36 is provided on each of the front and the rear sides on both sides of the nacelle cover 23 relative to a vertical plane including the center line of the nacelle 20 (in the same direction as the axial center of the main shaft 6 in plan view). In some embodiments, the actuator 36 may be further provided to the nacelle cover 23.

As described above, the movable cover 26 is supported with its load evenly distributed among the plurality of actuators 36. Thus, the movable cover 26 can be stably moved, and can be stably held at the position separated from the fixed cover 24.

As illustrated in FIGS. 4A and 4B, the actuators 36 each include: a cylinder 38 that extends in the upper and lower direction; and a piston 39 that can reciprocate in the upper and lower direction while being guided by the cylinder 38. The cylinder 38 is fixed to the fixed cover 24, and the piston 39 has an upper end portion fixed to the movable cover 26.

As illustrated in FIG. 5, the cylinder 38 is fixed to the fixed cover 24 via a fixing jig 60 attached to the fixed cover 24. The fixing jig 60 includes: an attachment plate 61 to which the cylinder 38 is attached; a fixed plate 62 fixed to the flange 52 of the fixed cover 24; and a connection column 63 that connects the attachment plate 61 to the fixed plate 62. The cylinder 38 has an upper end portion provided with a flange 56. The flange 56 and the attachment plate 61 are joined together with bolts 57. The fixed plate 62 and the flange 52 of the fixed cover 24 are joined together with bolts 58. Thus, the cylinder 38 is fixed to the fixed cover 24.

The actuator 36 may be a fluid cylinder in which a movement amount (stroke) of the piston 39 can be adjusted by adjusting an amount of working fluid supplied to the cylinder 38. In such a case, the amount of movement of the piston 39 with respect to the fixed cover 24, that is, the lifted amount of the movable cover 26 with respect to the fixed cover 24 can be adjusted by adjusting the amount of working fluid supplied to the cylinder 38.

In some embodiments, the actuator 36 is configured to move the movable cover 26 with hydraulic pressure or pneumatic pressure used in the drive train or an auxiliary machine of the wind turbine generator 1. Thus, the movable cover 26 can be efficiently lifted and lowered with respect to the fixed cover 24 with the hydraulic pressure or the pneumatic pressure used in the drive train or an auxiliary machine of the wind turbine generator 1.

For example, it is a common practice in the wind turbine generator 1 to use lubricating oil for lubricating a bearing, a gear, or the like. Thus, oil used as the lubricating oil may be used as the hydraulic oil for the actuators 36.

For example, when the drive train 11 using the hydraulic transmission including the hydraulic pressure pump 12 and the hydraulic pressure motor 14 as in the wind turbine generator 1 illustrated in FIG. 1, the hydraulic oil used in the hydraulic transmission may also be used for the actuator 36.

Alternatively, hydraulic oil used for the auxiliary machine, such as a hydraulic pressure actuator used for pitch control for the blade 2 and yaw control for the wind turbine rotor 3, may also be used for the actuator 36.

As illustrated in FIG. 5, the piston 39 has an upper end portion provided with a swing portion 66. The swing portion 66 (more specifically, a second portion 68 of the swing portion 66 described later) is fastened to the flange 54 of the movable cover 26 with a bolt 42. Thus, the piston 39 is fixed to the movable cover 26.

Thus, by moving the movable cover 26 in accordance with the reciprocation of the piston 39 guided by the cylinder 38 fixed to the fixed cover 24, movable cover 26 can be moved in the upper and lower direction with respect to the fixed cover 24. Thus, a maintenance work space can be formed between the movable cover 26 and the fixed cover 24.

In another embodiment, the cylinder 38 may be fixed to the movable cover 26 and the piston 39 may be fixed to the fixed cover 24. In this configuration, by moving the fixed cover 24 with respect to the movable cover 26 in accordance with the reciprocation of the piston 39 guided by the cylinder 38 fixed to the movable cover 26, the movable cover 26 can be moved in the upper and lower direction with respect to the fixed cover 24.

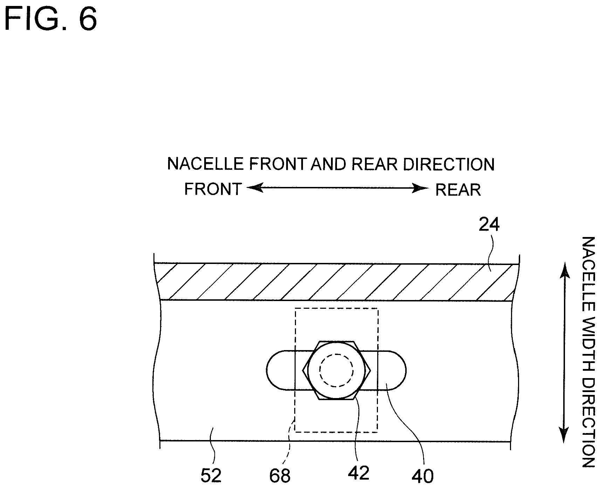

FIG. 6 is a cross-sectional view of the nacelle 20 and is a plan view of an attachment portion for the actuator 36 illustrated in FIG. 5.

In some embodiments, the actuator 36 is attached to the movable cover 26 while having a movable space in relation to the movable cover 26.

In the embodiment illustrated in FIG. 5, the swing portion 66, provided to a distal end portion of the piston 39, includes: a first portion 67 connected to the piston 39 with a bolt 64; a second portion 68 attached to the flange 54 of the movable cover 26 with a bolt 42; and a pin 69 provided through the first portion 67 and the second portion 68. The first portion 67 and the second portion 68 can swing with respect to each other about an axis P of the pin 69. In this configuration, the actuator 36 has a movable space, in the width direction of the nacelle 20 (a direction orthogonal to the sheet plane in FIG. 5), in relation to the movable cover 26.

In one embodiment, as illustrated in FIG. 6, a bolt hole 40 for attaching the actuator 36 to the movable cover 26 is formed on the flange 54 of the movable cover 26. The bolt hole 40 is an elongated hole extending along the front and rear direction of the nacelle 20. Thus, the actuator 36 has the movable space, in the front and rear direction of the nacelle 20, in relation to the movable cover 26.

As described above, the actuator 36 is attached to the movable cover 26 while having the movable space in relation to the movable cover 26. Thus, the actuator 36 can be prevented from malfunctioning even when the positions of the fixed cover 24 and the movable cover 26 are shifted with each other.

In some embodiments, as illustrated in FIG. 3, the nacelle 20 further includes a linear guide for guiding the movable cover 26 in the upper and lower direction with respect to the fixed cover 24.

In an exemplary embodiment illustrated in FIG. 3, the nacelle 20 includes ball splines 44 as the liner guide. In the example illustrated in FIG. 3, a plurality of the ball splines 44 are each disposed adjacent to the corresponding one of the actuators 36 in the front and rear direction of the nacelle 20.

As illustrated in FIG. 4A, the ball splines 44 each include: a spline shaft 45 extending in the upper and lower direction; and a sleeve 46 that supports the spline shaft 45 via a ball (not illustrated). The sleeve 46 is fixed to the fixed cover 24, and the spline shaft 45 is fixed to the movable cover 26.

In some embodiments, as illustrated in FIGS. 4A and 5, the sleeve 46 is welded to the fixing jig 60 described above, and is fixed to the fixed cover 24 via the fixing jig 60. As illustrated in FIG. 5, the spline shaft 45 has an upper end portion provided with the swing portion 70. The spline shaft 45 is fixed to the movable cover 26 with the swing portion 70 joined to the flange 54 of the movable cover 26 with a bolt 72.

Thus, the spline shaft 45 can move in the upper and lower direction with respect to the fixed cover 24, while being supported by the sleeve 46 fixed to the fixed cover 24.

With the movable cover 26 moving in the upper and lower direction with respect to the fixed cover 24 while being guided by the ball spline 44 (linear guide), the actuator 36 can smoothly move the movable cover 26 upward and downward.

In some embodiments, the linear guide may be attached to the movable cover 26 with a movable space in relation to the movable cover 26, as in the case of the actuator 36.

For example, as in the embodiment illustrated in FIG. 5, the swing portion 70 of the ball spline 44 can be swing about an axis Q of the pin 71. Thus, the ball spline 44 can have the movable space in the width direction of the nacelle 20 in relation to the movable cover 26. A bolt hole (not illustrated) formed on the flange 54 of the movable cover 26 for attaching the ball spline 44 to the movable cover 26 may be an elongated hole extending along the front and rear direction of the nacelle 20. Thus, the ball spline 44 may have the movable space in the front and rear direction of the nacelle 20 in relation to the movable cover 26.

With the ball spline 44 attached to the movable cover 26 with the movable space in relation to the movable cover 26 as described above, even when the relative positional shift occurs between the fixed cover 24 and the movable cover 26, the movement of the movable cover 26 in the upper and lower direction with respect to the fixed cover 24 can be guided while preventing the malfunctioning of the actuator 36 due to the positional shift.

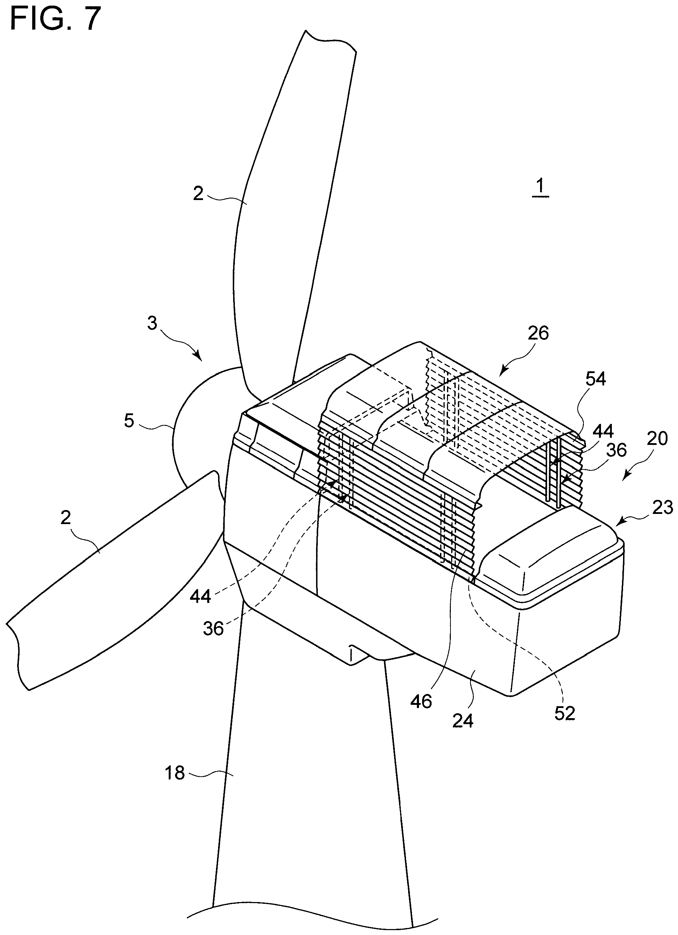

FIG. 7 is a perspective view of a wind turbine generator including a nacelle according to one embodiment.

In some embodiments, the nacelle 20 includes a wall member for closing a gap between the movable cover 26 and the fixed cover 24 when the movable cover 26 is lifted.

In an exemplary embodiment illustrated in FIG. 7, the nacelle 20 includes a bellows member 47 extendable and retractable in the upper and lower direction, as the wall member. The bellows member 47 has a lower end portion attached to the flange 52 of the fixed cover 24, and has an upper end portion attached to the flange 54 of the movable cover 26.

The bellows member 47 is extendable and retractable in the upper and lower direction. The bellows member 47 extends and contracts in accordance with an amount of movement of the movable cover 26 with respect to the fixed cover 24 in the upper and lower direction. Thus, the gap between the movable cover 26 and the fixed cover 24 is covered by the bellows member 47 regardless of the change in the height of the movable cover 26.

With the gap between the movable cover 26 at a lifted position and the fixed cover 24 is closed by the wall member as described above, rain, wind, or the like can be prevented from entering the maintenance work space through the gap. Thus, the maintenance work in the work space can be performed while being less affected by the weather such as rain and wind.

When the wall member includes the bellows member 47 described above, the bellows member 47 can be extended and contacted in accordance with the amount of movement of the movable cover 26 in the upper and lower direction. Thus, the gap between the movable cover 26 and the fixed cover 24 can be closed regardless of the position of the movable cover 26 with respect to the fixed cover 24, whereby the influence of rain and wind on the maintenance work in the work space can be more effectively reduced.

In some embodiments, the nacelle 20 further includes a supporting member for supporting a load of the movable cover 26 being lifted.

In the exemplary embodiment illustrated in FIG. 4A, the nacelle 20 includes a truss structure 48 and support columns 50. The supporting member (the truss structure 48 and the support columns 50) has an upper end portion fixed to the movable cover 26 and a lower end portion fixed to the fixed cover 24.

In the embodiment illustrated in FIG. 4A, the support column 50 may be fixed to the fixed cover 24 and the movable cover 26 with a flange 51 and a flange 53 respectively joined to the flange 52 of the fixed cover 24 and the flange 54 of the movable cover 26 with bolts. The flange 51 and the flange 53 are respectively provided to the lower end portion and the upper end portion of the support column 50.

In the embodiment illustrated in FIG. 4A, the truss structure 48 includes support rods 49a and 49b. The support rod 49a and the support rod 49b are provide to cross each other at a portion between the upper end portion and the lower end portion of the support rods 49a and 49b. The support rod 49a and the support rod 49b may have the upper and lower end portions fixed to attachment portions provided to the flanges 53 and 51 of the support column 50, with bolts.

When the movable cover 26 is lifted, the load of the movable cover 26 is supported by the supporting member (the truss structure 48, the support column 50, or the like) described above. Thus, the movable cover 26 can be stably held at a position lifted with respect to the fixed cover 24.

The number of supporting members provided to the nacelle 20 is not limited, as long as enough number of supporting members for supporting the load of the movable cover 26 is provided.

Next, a method for lifting and lowering a component of the wind turbine generator 1 according to some embodiments described above is described.

In some embodiment, the movable cover 26 of the nacelle 20 is first lifted by using the actuator 36 and the like (S1: cover lifting step: see FIGS. 3 to 5). In step S1, the movable cover 26 may be guided by the linear guide (for example, the ball spline 44 illustrated in FIGS. 3 to 5) so that the movable cover 26 moves in the upper and lower direction with respect to the fixed cover 24.

Next, the temporary lifting and lowering device 30 is installed by using the region (expanded space S') of the nacelle inner space expanded by lifting the movable cover 26 in step S1 (S2: installing step).

Then, the components of the wind turbine generator 1 is lifted or lowered by using the temporary lifting and lowering device 30 installed in step S2 (S3: component lifting and lowering step). For example, as illustrated in FIG. 1, the hydraulic pressure motor 14 disposed in the nacelle 20 is lifted or lowered by using the temporary lifting and lowering device 30. In the component lifting and lower step S3, the expanded space S' large enough to install the temporary lifting and lowering device 30 in the installing step S2 might not be required. In such a case, the movable cover 26 of the nacelle 20 is partially or entirely lowered by using the actuator 36 before step S3. Thus, the expanded space S' may be reduced to be the size only required for lifting/lowering the component of the wind turbine generator 1. Thus, the amount of rain and wind entering the expanded space S' through the gap between the movable cover 26 and the fixed cover 24 can be reduced.

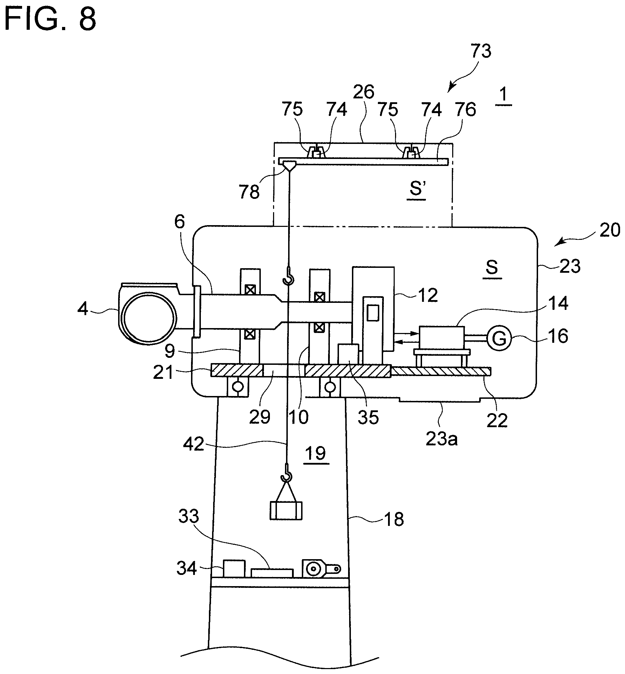

The installing step S2 in which the temporary lifting and lowering device 30 is disposed in the method for lifting and lowering a component according to one embodiment is described more in detail with reference to FIG. 8. FIG. 8 is a diagram illustrating an example of a method of installing the temporary lifting and lowering device 30, and illustrates a state where each section (component) of the temporary lifting and lowering device 30 is carried into the nacelle.

In some embodiments, as illustrated in FIG. 8, components of the temporary lifting and lowering device 30 are disposed in the tower inner space 19. The components can each be disassembled into pieces small enough to pass through the second opening 29. For example, the arm 33 (see FIG. 1) can be disassembled into a first arm 33a, a second arm 33b, a third arm 33c, and a fourth arm 33d (see FIG 2).

In one embodiment, in the installing step S2, the components are carried into the nacelle inner space S and/or the expanded space S' from the tower inner space 19 through the second opening 29, by using the lifting and lowering device 73 disposed on the movable cover 26. Thus, the temporary lifting and lowering device 30 is assembled with the lifting and lowering device 73, by using the expanded space S'.

The lifting and lowering device 73 includes: a front and rear direction rail 76 provided along the front and rear direction of the nacelle 20; a width direction rail 74 provided along the width direction of the nacelle 20; a bracket 75 attached to the front and rear direction rail 76; and a chain block 78 that is attached to the front and rear direction rail 76 and can move along the front and rear direction rail 76.

The bracket 75 attached to the front and rear direction rail 76 is slidably engaged with the width direction rail 74. Thus, the front and rear direction rail 76 is movable in the width direction. The chain block 78 is movable along the front and rear direction rail 76, and thus is movable in the front and rear direction. Furthermore, the chain block 78 is movable in the width direction because the front and rear direction rail 76 is movable in the width direction. Thus, the chain block 78 is movable by any amount in the front and rear direction and in the width direction, in a region in which the front and rear direction rail 76 and the width direction rail 74 are provided.

In the installing step S2, first of all, the components are carried into the nacelle inner space S and/or the expanded space S' through the second opening 29 from the tower inner space 19 by using the lifting and lowering device 73 as illustrated in FIG. 8. The component thus carried in is temporarily stored in an empty space in the nacelle inner space S and/ or the expanded space S'.

The components of the temporary lifting and lowering device 30 are attached to the nacelle 20 with the expanded space S', by using the lifting and lowering device 73. The winder 31 (see FIG. 1) disposed in the tower inner space 19 winds the wire 32 via the arm 33 and the pulley 35 disposed in the nacelle inner space S and/ or the expanded space S', through the second opening 29. Then, an end portion of the wire 32 is fixed to a predetermined position.

The components of the wind turbine generator 1 can be lifted/lowered in the component lifting/lowering step S3 by using the temporary lifting and lowering device 30 (see FIG. 1) assembled as described above.

The lifting and lowering device 73 may be a temporary lifting and lowering device that is temporarily attached to the movable cover 26, only when the lifting and lowering device is used, or when the movable cover 26 is lifted above the fixed cover 24.

In the installing step S2, a device other than the lifting and lowering device 73 attached to the movable cover 26 may be used for carrying the components of the temporary lifting and lowering device 30 into the nacelle inner space S and/or the expanded space S' from the tower inner space 19, or for assembling the temporary lifting and lowering device 30 by using the expanded space S'. For example, in some embodiments, in the installing step S2, a lifting and lowering device (not illustrated) disposed in the nacelle inner space S may be used for carrying the components of the temporary lifting and lowering device 30 into the nacelle inner space S and/or the expanded space S' from the tower inner space 19, or for assembling the temporary lifting and lowering device 30 by using the expanded space S'. For example, the above described lifting and lowering device disposed in the nacelle inner space S may be a crane or a winch attached to the nacelle base plate 21, the nacelle frame, or the like.

The expressions used herein that mean relative or absolute arrangement, such as "in a direction", "along a direction", "in parallel with", "orthogonal to", "center", "concentrically", and "coaxial" mean not only exactly what they refer to but also such states that are relatively displaced with a tolerance or by an angle or distance that is small enough to achieve the same level of functionality.

For example, the expressions used herein that mean things are equivalent to each other, such as "the same", "equivalent", and "uniform", mean not only exactly equivalent states but also such states that have a tolerance or a difference that is small enough to achieve the same level of functionality.

For example, expressions that represent shapes, such as quadrangles and cylindrical shapes, mean not only what they refer to in a geometrically strict sense but also shapes having some irregularities, chamfered portions, or the like that can provide the same level of functionality.

The expressions "including", "comprising", and "provided with" one component are not exclusive expressions that exclude other components.

## Claims

1. A wind turbine nacelle (20) comprising a nacelle cover (23) forming a nacelle inner space (S), wherein the nacelle cover (23) includes:
a fixed cover (24) which includes a side wall portion of the nacelle cover (23);
a movable cover (26) which includes at least a part of a ceiling portion of the nacelle cover (23) and is attached to the fixed cover (24) in such a manner as to be liftable in a vertical direction with respect to the fixed cover (24); and
an opening (25) formed in the nacelle (20) through which a device disposed in the nacelle inner space (S) can be lifted and lowered between the nacelle inner space (S) and a nacelle outer space using a temporary lifting and lowering device (30),
wherein, in use, when the movable cover (26) is lifted in the vertical direction with respect to the fixed cover (24) into a position above the fixed cover (24), an expanded space (S') as the nacelle inner space (S) is formed below the lifted movable cover (26) such that the expanded space (S') is covered with the movable cover (26) on the upper side, and
wherein the movable cover (26) is configured such that, when, in use, the movable cover (26) is lifted in the vertical direction with respect to the fixed cover (24) into the position above the fixed cover, the temporary lifting and lowering device (30) is disposed in the expanded space (S') formed by the moveable cover (26) in the vertical direction with respect to the fixed cover (24) in use of the temporary lifting and lowering device (30).

2. The wind turbine nacelle (20) according to claim 1, further comprising at least one actuator (36) for lifting and lowering the movable cover (26) with respect to the fixed cover (24).

3. The wind turbine nacelle (20) according to claim 2, wherein the at least one actuator (36) includes:
a cylinder (38) which is fixed to one of the fixed cover (24) or the movable cover (26); and
a piston (39) which is fixed to the other one of the fixed cover (24) or the movable cover (26), and is configured to reciprocate while being guided by the cylinder (38).

4. The wind turbine nacelle (20) according to claim 2 or 3, wherein the at least one actuator (36) includes a plurality of actuators (36) arranged so as to support a load of the movable cover (26), the load being distributed evenly among the actuators (36).

5. The wind turbine nacelle (20) according to any one of claims 2 to 4, wherein each of the at least one actuator (36) is attached to the movable cover (26) while having a movable space in relation to the movable cover (26).

6. The wind turbine nacelle (20) according to any one of claims 1 to 5, further comprising a linear guide (44) for guiding the movable cover (26) to move in the vertical direction with respect to the fixed cover (24).

7. The wind turbine nacelle (20) according to any one of claims 1 to 6, further comprising a wall member for closing a gap between the movable cover (26) and the fixed cover (24) when the movable cover (26) is lifted.

8. The wind turbine nacelle (20) according to claim 7, wherein the wall member includes a bellows member (47) extendable and retractable in the vertical direction.

9. The wind turbine nacelle (20) according to any one of claims 1 to 8, further comprising a supporting member (48,50) configured to support the load of the movable cover (26) when the movable cover (26) is lifted, the supporting member (48, 50) including an upper end portion fixed to the movable cover (26) and a lower end portion fixed to the fixed cover (24).

10. The wind turbine nacelle (20) according to any one of claims 1 to 9, wherein
the nacelle cover (23) includes a plurality of cover sections (23A,23C,23C) which are arranged along a front and rear direction of the wind turbine nacelle (20) and coupled to each other,
at least one cover section of the plurality of cover sections (23A,23C,23C) includes:
a fixed member (24a) which forms at least a part of the fixed cover (24); and
a movable member (26a) which forms at least a part of the movable cover (26), is disposed above the fixed member (24a), and is configured to be movable in the vertical direction with respect to the fixed member (24a).

11. The wind turbine nacelle (20) according to any one of claims 1 to 10, wherein the movable cover (26) at least includes an area, in the ceiling portion of the nacelle cover (23), in which the temporary lifting and lowering device (30) is installed.

12. A wind turbine generator (1) comprising:
the nacelle (20) according to any one of claims 1 to 11;
a wind turbine rotor (3) rotatably supported by the nacelle (20); and
a generator (16) configured to be driven by rotational energy from the wind turbine rotor (3).

13. The wind turbine generator (1) according to claim 12, wherein
the nacelle (20) further includes at least one actuator (36) for lifting and lowering the movable cover (26) with respect to the fixed cover (24), and
the actuator (36) is configured to move the movable cover (26) with hydraulic pressure or pneumatic pressure used by a drive train (11) or an auxiliary machine of the wind turbine generator (1).

14. A method for lifting and lowering a component of a wind turbine generator including a nacelle (20), the nacelle (20) including a nacelle cover (23) forming a nacelle inner space (S), the nacelle cover (23) including: a fixed cover (24) which includes a side wall portion of the nacelle cover (23); and a movable cover (26) which includes at least a part of a ceiling portion of the nacelle cover (23) and is attached to the fixed cover (24) in such a manner as to be liftable in a vertical direction with respect to the fixed cover (24),
the method comprising:
a step of lifting the movable cover (26) in the vertical direction with respect to the fixed cover into a position above the fixed cover so as to form an expanded space (S') as the nacelle inner space (S) below the lifted movable cover (26) such that the expanded space (S') is covered with the movable cover (26) on the upper side; and
a step of lifting and lowering the component of the wind turbine generator (1) between the nacelle inner space (S) and a nacelle outer space through an opening (25) formed in the nacelle (20) by using a temporary lifting and lowering device (30) installed in an area of the nacelle inner space (S) expanded due to the lifting of the movable cover (26).

15. The method for lifting and lowering a component of a wind turbine generator (1) according to claim 14, wherein the step of lifting the movable cover (26) includes guiding the movable cover (26) with a linear guide (44) in such a manner that the movable cover (26) moves in the vertical direction with respect to the fixed cover (24).

## Patentansprüche

1. Eine Windturbinengondel (20) mit einer Gondelabdeckung (23), die einen Gondelinnenraum (S) bildet, wobei die Gondelabdeckung (23) aufweist:
eine feststehende Abdeckung (24), die einen Seitenwandabschnitt der Gondelabdeckung (23) umfasst,
eine bewegliche Abdeckung (26), die zumindest einen Teil eines Deckenabschnitts der Gondelabdeckung (23) umfasst und die an der feststehenden Abdeckung (24) auf solche Weise angebracht ist, dass sie in einer Vertikalrichtung bezüglich der feststehenden Abdeckung (24) anhebbar ist, und
einer Öffnung (25), die in der Gondel (20) ausgebildet ist, durch die eine in dem Gondelinnenraum (S) angeordnete Vorrichtung unter Verwendung einer temporären Anhebe- und Absenkvorrichtung (30) zwischen dem Gondelinnenraum (S) und einem Gondelaußenraum angehoben und abgesenkt werden kann,
wobei, im Einsatz, wenn die bewegliche Abdeckung (26) in der Vertikalrichtung bezüglich der feststehenden Abdeckung (24) in eine Position über der feststehenden Abdeckung (24) angehoben ist, ein erweiterter Raum (S') als der Gondelinnenraum (S) unterhalb der anhebbaren beweglichen Abdeckung (26) so gebildet ist, dass der erweiterte Raum (S') mit der beweglichen Abdeckung (26) an der oberen Seite abgedeckt ist, und
wobei die bewegliche Abdeckung (26) so konfiguriert ist, dass, wenn im Einsatz die bewegliche Abdeckung (26) in der Vertikalrichtung bezüglich der feststehenden Abdeckung (24) in die Position über der feststehenden Abdeckung angehoben ist, die temporäre Anhebe- und Absenkvorrichtung (30) in dem erweiterten Raum (S') angeordnet ist, der durch die bewegliche Abdeckung (26) in der Vertikalrichtung bezüglich der feststehenden Abdeckung (24) im Einsatz der temporären Anhebe- und Absenkvorrichtung (30) gebildet ist.

2. Die Windturbinengondel (20) gemäß Anspruch 1, ferner mit zumindest einem Aktuator (36) zum Anheben und Absenken der beweglichen Abdeckung (26) bezüglich der feststehenden Abdeckung (24).

3. Die Windturbinengondel (20) gemäß Anspruch 2, wobei der zumindest einen Aktuator (36) aufweist:
einen Zylinder (38), der an einem von der feststehenden Abdeckung (24) oder der beweglichen Abdeckung (26) befestigt ist, und
einen Kolben (39), der an dem anderen von der feststehenden Abdeckung (24) oder der beweglichen Abdeckung (26) befestigt ist und der konfiguriert ist, um sich unter Führung durch den Zylinder (38) hin und her zu bewegen.

4. Die Windturbinengondel (20) gemäß Anspruch 2 oder 3, wobei der zumindest eine Aktuator (36) eine Vielzahl von Aktuatoren (36) aufweist, die so angeordnet sind, dass sie eine Last der beweglichen Abdeckung (26) tragen, wobei die Last gleichmäßig unter den Aktuatoren (36) verteilt wird.

5. Die Windturbinengondel (20) gemäß einem der Ansprüche 2 bis 4, wobei jeder von dem zumindest einen Aktuator (36) an der beweglichen Abdeckung (26) angebracht ist, während er einen beweglichen Raum bezüglich der beweglichen Abdeckung (26) hat.

6. Die Windturbinengondel (20) gemäß einem der Ansprüche 1 bis 5, ferner mit einer Linearführung (44) zum Führen der beweglichen Abdeckung (26) in einer Bewegung in der Vertikalrichtung bezüglich der feststehenden Abdeckung (24).

7. Die Windturbinengondel (20) gemäß einem der Ansprüche 1 bis 6, ferner mit einem Wandelement zum Schließen eines Zwischenraums zwischen der beweglichen Abdeckung (26) und der feststehenden Abdeckung (24), wenn die bewegliche Abdeckung (26) angehoben ist.

8. Die Windturbinengondel (20) gemäß Anspruch 7, wobei das Wandelement ein Balgenelement (47) aufweist, das in der Vertikalrichtung ausstreckbar und zusammenziehbar ist.

9. Die Windturbinengondel (20) gemäß einem der Ansprüche 1 bis 8, ferner mit einem Tragelement (48,50), das konfiguriert ist, um die Last der beweglichen Abdeckung (26) zu tragen, wenn die bewegliche Abdeckung (26) angehoben ist, wobei das Tragelement (48,50) einen oberen Endabschnitt, der an der beweglichen Abdeckung (26) befestigt ist, und einen unteren Endabschnitt, der an der feststehenden Abdeckung (24) befestigt ist, aufweist.

10. Die Windturbinengondel (20) gemäß einem der Ansprüche 1 bis 9, wobei
die Gondelabdeckung (23) eine Vielzahl von Abdeckabschnitten (23A,23C,23C) aufweist, die entlang einer Vorwärts- und Rückwärtsrichtung der Windturbinengondel (20) angeordnet sind und miteinander gekoppelt sind,
wobei zumindest ein Abdeckabschnitt der Vielzahl von Abdeckabschnitten (23A,23C,23C) aufweist:
ein feststehendes Element (24a), das zumindest einen Teil der feststehenden Abdeckung (24) bildet, und
ein bewegliches Element (26a), das zumindest einen Teil der beweglichen Abdeckung (26) bildet, über dem feststehenden Element (24a) angeordnet ist, und konfiguriert ist, um in der Vertikalrichtung bezüglich dem feststehenden Element (24a) bewegbar zu sein.

11. Die Windturbinengondel (20) gemäß einem der Ansprüche 1 bis 10, wobei die bewegliche Abdeckung (26) in dem Deckenabschnitt der Gondelabdeckung (23) zumindest einen Bereich aufweist, in dem die temporäre Anhebe- und Absenkvorrichtung (30) installiert ist.

12. Ein Windturbinengenerator (1) mit:
der Gondel (20) gemäß einem der Ansprüche 1 bis 11,
einem Windturbinenrotor (3), der von der Gondel (20) drehbar getragen ist, und
einem Generator (16), der konfiguriert ist, um durch Rotationsenergie von dem Windturbinenrotor (3) angetrieben zu werden.

13. Der Windturbinengenerator (1) gemäß Anspruch 12, wobei
die Gondel (20) ferner zumindest einen Aktuator (36) zum Anheben und Absenken der beweglichen Abdeckung (26) bezüglich der feststehenden Abdeckung (24) aufweist, und
der Aktuator (36) konfiguriert ist, um die bewegliche Abdeckung (26) mit Hydraulikdruck oder Pneumatikdruck, der durch einen Antriebszug (11) verwendet wird, oder eine Hilfsmaschine des Windturbinengenerators (1) zu bewegen.

14. Ein Verfahren zum Anheben und Absenken einer Komponente eines Windturbinengenerators, der eine Gondel (20) besitzt, wobei die Gondel (20) eine Gondelabdeckung (23) aufweist, die einen Gondelinnenraum (S) bildet, wobei die Gondelabdeckung (23) aufweist:
eine feststehende Abdeckung (24), die einen Seitenwandabschnitt der Gondelabdeckung (23) aufweist, und eine bewegliche Abdeckung (26), die zumindest einen Teil eines Deckenabschnitts der Gondelabdeckung (23) aufweist und die an der feststehenden Abdeckung (24) auf solche Weise angebracht ist, dass sie in einer Vertikalrichtung bezüglich der feststehenden Abdeckung (24) anhebbar ist, wobei das Verfahren aufweist:
einen Schritt des Anhebens der beweglichen Abdeckung (26) in der Vertikalrichtung bezüglich der feststehenden Abdeckung in eine Position über der feststehenden Abdeckung, um einen erweiterten Raum (S') als den Gondelinnenraum (S) unter der angehobenen beweglichen Abdeckung (26) so zu bilden, dass der erweiterte Raum (S') mit der beweglichen Abdeckung (26) an der oberen Seite abgedeckt ist, und
einen Schritt des Anhebens und Absenkens der Komponente des Windturbinengenerators (1) zwischen dem Gondelinnenraum (S) und einem Gondelaußenraum durch eine Öffnung (25), die in der Gondel (20) gebildet ist, unter Verwendung einer temporären Anhebe- und Absenkvorrichtung (30), die in einem Bereich des Gondelinnenraums (S) installiert ist, der aufgrund des Anhebens der beweglichen Abdeckung (26) erweitert ist bzw. wird.

15. Das Verfahren zum Anheben und Absenken einer Komponente eines Windturbinengenerators (1) gemäß Anspruch 14, wobei der Schritt des Anhebens der beweglichen Abdeckung (26) ein Führen der beweglichen Abdeckung (26) mit einer Linearführung (44) auf solche Weise aufweist, dass die bewegliche Abdeckung (26) sich in der Vertikalrichtung bezüglich der feststehenden Abdeckung (24) bewegt.

## Revendications

1. Nacelle (20) d'éolienne, comprenant un couvercle (23) de nacelle, formant un espace (S) intérieur de nacelle, le couvercle (23) de la nacelle comprenant :
un couvercle (24) fixe, qui comprend une partie de paroi latérale du couvercle (23) de la nacelle ;
un couvercle (26) mobile, qui comprend au moins un peu d'une partie de plafond du couvercle (23) de la nacelle et qui est relié au couvercle (24) fixe, de manière à pouvoir être levé dans une direction verticale par rapport au couvercle(24) fixe et
une ouverture (25) formée dans la nacelle (20), par laquelle un dispositif, disposé dans l'espace (S) intérieur de la nacelle, peut être levé et abaissé entre l'espace (S) intérieur de la nacelle et un espace extérieur à la nacelle, en utilisant un dispositif (30) temporaire de levée et d'abaissement,
dans laquelle, en utilisation, lorsque le couvercle (26) mobile est levé dans la direction verticale par rapport au couvercle (24) fixe, pour venir dans une position au-dessus du couvercle (24) fixe, un espace (S') agrandi, en tant qu'espace (S) intérieur de la nacelle, est formé en dessous du couvercle (26) mobile levé, de manière à ce que l'espace (S') agrandi soit couvert du couvercle (26) mobile du côté supérieur et
dans laquelle le couvercle (26) mobile est configuré de manière à ce que, lorsque, en utilisation, le couvercle (26) mobile est levé dans la direction verticale par rapport au couvercle (24) fixe pour venir dans la position au-dessus du couvercle fixe, le dispositif (30) temporaire de levée et d'abaissement soit disposé dans l'espace (S') agrandi formé par le couvercle (26) mobile dans la direction verticale par rapport au couvercle (24) fixe en utilisation du dispositif (30) temporaire de levée et d'abaissement.

2. Nacelle (20) d'éolienne suivant la revendication 1, comprenant, en outre, au moins un actionneur (36) pour lever et abaisser le couvercle (26) mobile par rapport au couvercle (24) fixe.

3. Nacelle (20) d'éolienne suivant la revendication 2, dans laquelle le au moins un actionneur (36) comprend :
un cylindre (38), qui est fixé à l'un du couvercle (24) fixe ou du couvercle (26) mobile et
un piston (39), qui est fixé à l'autre du couvercle (24) fixe ou du couvercle (26) mobile et qui est configuré pour aller et venir en étant guidé par le cylindre (38).

4. Nacelle (20) d'éolienne suivant la revendication 2 ou 3, dans laquelle le au moins un actionneur (36) comprend une pluralité d'actionneurs (36) disposés de manière à supporter une charge de couvercle (26) mobile, la charge étant répartie également entre les actionneurs (36).

5. Nacelle (20) d'éolienne suivant l'une quelconque des revendications 2 à 4, dans laquelle chacun du au moins un actionneur (36) est relié au couvercle (26) mobile, tout en ayant un espace mobile en relation avec le couvercle (26) mobile.

6. Nacelle (20) d'éolienne suivant l'une quelconque des revendications 1 à 5, comprenant, en outre, un guidage (44) linéaire pour guider le couvercle (26) mobile, afin qu'il se déplace dans la direction verticale par rapport au couvercle (24) fixe.

7. Nacelle (20) d'éolienne suivant l'une quelconque des revendications 1 à 6, comprenant, en outre, un élément de paroi pour fermer un intervalle entre le couvercle (26) mobile et le couvercle (24) fixe, lorsque le couvercle (26) mobile est levé.

8. Nacelle (20) d'éolienne suivant la revendication 7, dans lequel l'élément de paroi comprend un élément (47) de soufflet pouvant se déployer et se rétracter dans la direction verticale.

9. Nacelle (20) d'éolienne suivant l'une quelconque des revendications 1 à 8, comprenant, en outre, un élément (48, 50) de support, configuré pour supporter la charge du couvercle (26) mobile, lorsque le couvercle (26) mobile est levé, l'élément (48, 50) de support comprenant une partie d'extrémité supérieure fixée au couvercle (26) mobile et une partie d'extrémité inférieure fixée au couvercle (24) fixe.

10. Nacelle (20) d'éolienne suivant l'une quelconque des revendications 1 à 9, dans laquelle
le couvercle (23) de la nacelle comprend une pluralité de parties (23A, 23C, 23C) de couvercle, qui sont disposées suivant une direction avant et arrière de la nacelle (20) de l'éolienne et qui sont reliées les unes aux autres,
au moins une partie de couvercle parmi la pluralité de parties (23A, 23C, 23C) de couvercle comprend :
un élément (24A) fixe, qui forme au moins une partie du couvercle (24) fixe et
un élément (26a) mobile, qui forme au moins une partie du couvercle (26) mobile, est disposé au-dessus de l'élément (24a) fixe et est configuré pour être mobile dans la direction verticale par rapport à l'élément (24a) fixe.

11. Nacelle (20) d'éolienne suivant l'une quelconque des revendications 1 à 10, dans laquelle le couvercle (26) mobile comprend au moins une région dans la partie de plafond du couvercle (23) de la nacelle, dans laquelle est monté le dispositif (30) temporaire de levée et d'abaissement.

12. Génératrice (1) d'éolienne, comprenant :
la nacelle (20) suivant l'une quelconque des revendications 1 à 11 ;
une roue (3) d'éolienne supportée à rotation par la nacelle (20) et
une génératrice (16) configurée pour être entraînée par l'énergie de rotation de la roue (3) de l'éolienne.

13. Génératrice (1) d'éolienne suivant la revendication 12, dans laquelle
la nacelle (20) comprend, en outre, au moins un actionneur (36) pour lever et abaisser le couvercle (26) mobile par rapport au couvercle (24) fixe et
l'actionneur (36) est configuré pour déplacer le couvercle (26) mobile par une pression hydraulique ou par une pression pneumatique utilisée par une chaîne (11) cinématique ou une machine auxiliaire de la génératrice (1) d'éolienne.

14. Procédé pour lever et abaisser un élément d'une génératrice d'éolienne, comprenant une nacelle (20), la nacelle (20) comprenant un couvercle (23) de nacelle, formant un espace (S) intérieur de nacelle, le couvercle (23) de la nacelle comprenant un couvercle (24) fixe, qui comprend une partie de paroi latérale du couvercle (23) de la nacelle, et un couvercle (26) mobile, qui comprend au moins un peu d'une partie de plafond du couvercle (23) de la nacelle et qui est relié au couvercle (24) fixe de manière à pouvoir être levé dans une direction verticale par rapport au couvercle (24) fixe,
le procédé comprenant :
un stade de levée du couvercle (26) mobile dans la direction verticale par rapport au couvercle fixe, pour venir dans une position au-dessus du couvercle fixe, de manière à former un espace (S') agrandi, alors que l'espace (S) intérieur de la nacelle a été agrandi en dessous du couvercle (26) mobile levé, de manière à ce que l'espace (S') agrandi soit couvert par le couvercle (26) mobile du côté supérieur et
un stade de levée et d'abaissement de l'élément de la génératrice (1) d'éolienne entre l'espace (S) intérieur de la nacelle et un espace extérieur à la nacelle, par une ouverture (25) formée dans la nacelle, en utilisant un dispositif (30) temporaire de levée et d'abaissement monté dans une région de l'espace (S) intérieur de la nacelle, agrandi en raison de la levée du couvercle (26) mobile.

15. Procédé de levée et d'abaissement d'un élément d'une génératrice (1) d'éolienne suivant la revendication 14, dans lequel le stade de levée du couvercle (26) mobile comprend guider le couvercle (26) mobile par un guidage (44) linéaire, de manière à ce que le couvercle (26) mobile se déplace dans la direction verticale par rapport au couvercle (24) fixe.
